# FASCICULE DE BREVET EUROPEEN

(11) **EP 2 583 333 B1**
(45) Date de publication et mention de la délivrance du brevet: **09.04.2014**
(21) Numéro de dépôt: 11728218.6
(22) Date de dépôt: 15.06.2011
(51) Int. Cl.: H01M 2/26, H01M 4/38, H01M 4/58, H01M 4/66, H01M 4/134, H01M 10/052, H01M 10/0566, H01M 4/136, H01M 10/0569

(54) **ACCUMULATEUR ELECTROCHIMIQUE AU LITHIUM A ARCHITECTURE BIPOLAIRE SPECIFIQUE**
ELEKTROCHEMISCHER LITHIUMAKKUMULATOR MIT SPEZIFISCHER BIPOLARER ARCHITEKTUR
LITHIUM ELECTROCHEMICAL ACCUMULATOR HAVING A SPECIFIC BIPOLAR ARCHITECTURE

(30) Priorité: 17.06.2010 FR 1054818
(43) Date de publication de la demande: 24.04.2013
(73) Titulaire: Commissariat à l'Énergie Atomique et aux Énergies Alternatives, 75015 Paris (FR)
(72) Inventeur: BARCHASZ, Céline, F- 38600 Fontaine (FR); CHAMI, Marianne, F-38600 Fontaine (FR); MARTINET, Sébastien, F-38210 Saint Quentin / Isere (FR); PATOUX, Sébastien, F-38500 Saint Nicolas De Macherin (FR)
(74) Mandataire: Ilgart, Jean-Christophe
(86) Numéro de dépôt international: PCT/EP2011/059973
(87) Numéro de publication internationale: WO 2011/157768

(56) Documents cités:
- EP-A2- 1 487 034
- EP-A2- 2 003 715
- EP-A2- 2 073 300
- WO-A2-2006/061696
- FR-A1- 2 713 403
- US-A- 5 162 172
- US-A- 5 254 415
- US-A- 5 432 028
- US-A1- 2002 037 457
- US-B1- 6 911 280

## Description

### DOMAINE TECHNIQUE

La présente invention a trait à un accumulateur électrochimique au lithium à architecture dite bipolaire spécifique comprenant, comme substrats collecteurs de courant entre deux cellules adjacentes, des substrats en un matériau spécifique, qui permet d'utiliser un large panel de matériaux d'électrode positive et d'électrode négative.

Le domaine de l'invention peut ainsi être défini comme celui des dispositifs de stockage d'énergie, en particulier celui des accumulateurs électrochimiques.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une anode et une cathode) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ;
*les accumulateurs Li-ion utilisant classiquement, en tout ou partie, des matériaux lithiés comme matériaux d'électrode.

Depuis quelques années, les accumulateurs Li-ion ont détrôné largement les autres accumulateurs mentionnés ci-dessus du fait de l'amélioration continue des performances des accumulateurs Li-ion en terme de densité d'énergie. En effet, les accumulateurs lithium-ion permettent d'obtenir des densités d'énergie massique et volumique (pouvant être supérieures à 180 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre comme matériaux d'électrode le couple LiCoO₂/graphite contre une tension nominale de l'ordre de 1,5 V pour les autres accumulateurs susmentionnés).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique.

D'un point de vue fonctionnel, les accumulateurs Lithium-ion fonctionnent sur le principe de l'intercalation-désintercalation du lithium au sein des électrodes constitutives des cellules électrochimiques de l'accumulateur.

Plus précisément, la réaction à l'origine de la production de courant (c'est-à-dire lorsque l'accumulateur est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur auquel sont reliées les électrode positive et négative.

Pour ce type d'accumulateur, l'idée s'est présentée de réaliser un accumulateur comprenant une pluralité de cellules électrochimiques montées en série, afin d'augmenter la tension globale de l'accumulateur, tout en cherchant à limiter la masse et le volume de celui-ci.

Une architecture appropriée pour mettre en série des cellules électrochimiques, sans nuire à la masse et au volume de l'accumulateur résultant, est l'architecture dite « bipolaire », consistant à empiler plusieurs cellules électrochimiques séparées l'une de l'autre par un substrat collecteur de courant, une face de ce substrat étant occupée par une électrode d'une cellule tandis que la face opposée de ce substrat est occupée par une électrode de signe opposé d'une cellule adjacente. Ce type d'architecture permet de réduire la résistance électrique de l'ensemble par rapport à un accumulateur, qui serait composé d'une pluralité de cellules reliées entre elles par des connecteurs extérieurs.

Cette architecture bipolaire permet également de limiter les masses et volumes inutiles.

Des exemples d'accumulateurs à architecture bipolaire sont décrits respectivement dans le document US 5,162,172 et US 5,432,028.

Dans US 5,162,172, le substrat collecteur de courant est constitué de deux plaques soudées, respectivement une plaque formant la plaque positive, qui peut être en acier revêtu ou en un métal réfractaire, tel que le molybdène, et une plaque négative.

Dans US 5,432,028, le substrat collecteur de courant peut être en molybdène.

Les documents EP2 073 300 A2, WO, 2006/061696 A2, US 2002/037457 A1, FR2 713 403 A1 et US 6 911 280 B1 décrivent des accumulateurs électrochimiques de l'art antérieur.

Cependant, ce type d'architecture impose que les matériaux d'électrode positive et d'électrode négative soient compatibles avec le matériau du substrat collecteur de courant susmentionné, c'est-à-dire que les matériaux d'électrode ne doivent pas être aptes à former un alliage avec le matériau du substrat collecteur de courant, lors du fonctionnement de l'accumulateur.

Les auteurs de la présente invention se sont ainsi fixés comme but de proposer des accumulateurs à architecture bipolaire comprenant des substrats collecteurs de courant séparant les cellules adjacentes de l'accumulateur en un matériau tel qu'il permette l'utilisation d'un large panel de matériaux d'électrodes positive et négative, sans que cela pose de problèmes de compatibilité.

### EXPOSÉ DE L'INVENTION

Les auteurs de la présente invention ont découvert, de manière surprenante, qu'en utilisant du cuivre ou un alliage de cuivre pour constituer lesdits substrats collecteurs de courants, il est possible d'utiliser un large panel de matériaux d'électrode positive et négative.

Ainsi, l'invention a trait à un accumulateur électrochimique au lithium comprenant au moins une première cellule électrochimique et au moins une deuxième cellule électrochimique séparées l'une de l'autre par un substrat collecteur de courant, lequel substrat supporte sur une première face une électrode de ladite première cellule électrochimique et sur une deuxième face opposée à ladite première face une électrode de signe opposé de ladite deuxième cellule électrochimique, chaque cellule comprenant une électrode positive et une électrode négative séparées par un électrolyte, caractérisé en ce que :
- ledit substrat collecteur de courant est en cuivre ou en alliage de cuivre ;
   l'électrode négative peut comprendre un matériau choisi parmi :
   *les composés oxydes métalliques de formule MₓO_{y} avec M représentant un élément choisi parmi Ti, Cr, Mn, Fe, Co, Ni, Cu, Mo, W et les mélanges de ceux-ci, x et y étant des entiers positifs choisis de telle sorte que la charge totale des cations compense la charge totale des anions, de sorte à ce que le composé soit électriquement neutre ;
   *le lithium métallique ou un alliage comprenant du lithium métallique ;
   * l'étain métallique ; et
   *des mélanges de ceux-ci ; et
- l'électrode positive peut comprendre un matériau choisi parmi :
   *le soufre élémentaire ;
   *des composés sulfures ;
   et les mélanges de ceux-ci.

Avant d'entrer plus en détail dans l'exposé de cette invention, nous précisons les définitions suivantes.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Selon l'invention, l'électrode positive comprend un matériau choisi parmi le soufre élémentaire et les composés sulfures.

Par soufre élémentaire, on précise que l'on entend l'élément soufre non combiné avec un ou plusieurs éléments chimiques.

A titre d'exemples d'oxydes de métaux de transition éventuellement lithiés, on peut citer des oxydes mixtes de titane et de lithium, tels que Li₄Ti₅O₁₂, des oxydes mixtes de vanadium et de lithium, tels que LiV₃O₈ ou des oxydes de vanadium tels que V₂O₅.

A titre d'exemples de molybdates de métaux de transition éventuellement lithiés, on peut citer des molybdates de fer, tels que Fe₂(MoO₄)₃.

A titre d'exemples de phosphates de métaux de transition éventuellement lithiés, on peut citer FePO₄.

A titre de composés sulfures, on peut citer :
- les polysulfures de lithium de formule générale Li₂Sₙ, avec n étant un entier allant de 2 à 8 ;
- les polysulfures organiques de formule R₂Sₙ avec R correspondant à un groupe alkyle, par exemple un groupe alkyle comprenant de 2 à 6 atomes de carbone, ou à un groupe aryle et n étant un entier allant de 2 à 8 ;
- les composés organosoufrés du type poly(disulfure de carbone) de formule (CS₂)ₙ avec n étant un entier allant de 2 à 8.

Selon l'invention, l'électrode négative comprend un matériau choisi parmi :
*du lithium métallique ou un alliage comprenant du lithium métallique ;
*de l'étain métallique ; et
*des mélanges de ceux-ci.

Par lithium métallique, on entend l'élément lithium non combiné avec un ou plusieurs éléments chimiques.

Par alliage comprenant du lithium métallique, on entend un mélange comprenant du lithium métallique combiné avec un autre élément, tel que Al, Si, Sn, C (par exemple LiC₆).

Par étain métallique, on entend l'élément étain non combiné avec un ou plusieurs éléments chimiques.

Il s'entend que le matériau d'électrode négative doit être différent du matériau d'électrode positive.

Selon un mode particulièrement préféré de l'invention, l'électrode positive comprend du soufre élémentaire et l'électrode négative comprend du lithium métallique ou un alliage comprenant du lithium métallique.

Des accumulateurs comportant un tel couple d'électrodes dans leurs cellules électrochimiques présentent les avantages suivants :
- ils permettent d'atteindre des densités d'énergie très importantes, qui peuvent être supérieures à 300 Wh.kg⁻¹ et une tension globale d'accumulateur adaptée à l'application visée en jouant sur le nombre de cellules électrochimiques constitutives de l'accumulateur ;
- ils présentent, de par la constitution des électrodes, un système de protection intrinsèque des cellules électrochimiques vis-à-vis de la surcharge.

Concernant le premier avantage susmentionné, en empilant le nombre de cellules électrochimiques approprié, il est ainsi possible d'obtenir une tension globale d'accumulateur (par exemple 240 V) et une densité d'énergie très importante (par exemple, de l'ordre de 400 Wh.kg⁻¹), le nombre de cellules à empiler, pour obtenir une densité d'énergie donnée, étant moindre que les systèmes de l'art antérieur tels que ceux fonctionnant avec le couple d'électrodes LiFePO₄/Li₄Ti₅O₁₂ (pour lequel la densité d'énergie avoisine uniquement les 60 Wh.kg⁻¹), ce qui peut réduire la masse de l'accumulateur. Les accumulateurs de l'invention peuvent ainsi être particulièrement intéressants pour des domaines d'application tels que le domaine des véhicules électriques.

Concernant le deuxième avantage susmentionné, celui-ci découle du fait que le soufre constitutif de l'électrode positive est apte à assurer un mécanisme intrinsèque de protection contre les phénomènes de surchage, du fait que le soufre est apte lors des processus de charge à générer des composés du type polysulfure de lithium, répondant notamment à la formule Li₂Sₙ, avec n pouvant aller de 2 à 8.

Ce composé, une fois formé, va assurer, dans l'électrolyte le rôle de navette redox, ce qui signifie, en d'autres termes, que ce composé va subir, à un potentiel déterminé, une oxydation à l'une des électrodes de la cellule pour donner une forme oxydée de ce composé, cette forme oxydée subissant à son tour une réduction à l'électrode de signe opposé de la même cellule pour donner une forme réduite, cette forme réduite étant ensuite capable d'être oxydée à l'électrode de polarité inverse. Au potentiel déterminé susmentionné, un équilibre se met en place, entraînant la consommation du composé au niveau d'une électrode et sa régénération au niveau de l'électrode de signe opposé (d'où le nom de navette redox). Ces réactions se produisant à potentiel constant, ce phénomène de consommation/régénération de ce composé entraîne une stabilisation de la tension de cellule, dès que ce mécanisme se met en place.

Plus précisément, ce mécanisme de navette redox intervient à un potentiel se situant entre 2,4 et 2,5 V (ce potentiel étant exprimé par rapport au potentiel Li⁺/Li), ce qui signifie que la tension de cellule, lors du processus de charge se stabilise à ce potentiel, et ce quel que soit le temps de charge opéré. Pour ce couple d'électrodes mis en jeu dans les accumulateurs de l'invention, cette tension de cellule est parfaitement tolérable sans que celui nuise à l'intégrité des éléments constitutifs de la cellule.

En effet, la tension de cellule, grâce à l'action du composé du type polysulfure de lithium, se stabilise à une valeur inférieure à une valeur de tension, pour laquelle ladite cellule est en état de surcharge, et ce quel que soit le temps de charge, ce qui signifie que, lors des opérations de charge, il n'y a plus de risque, que ces cellules se trouvent en état de surchage et, par voie de conséquence, de dégradation des éléments de cette cellule due à cette surcharge.

De ce fait, en raison de la stabilisation de la tension de cellule grâce à l'action des composés du type polysulfure de lithium, la charge des cellules, dont la tension nominale n'est pas atteinte peut être maintenue, sans que cela n'affecte les cellules pour lesquelles la charge est achevée. Il s'ensuit ainsi, en fin de charge, un accumulateur dont chacune des cellules présente le même état de charge en fin de cycle et dont la tension globale est ainsi parfaitement définie.

Il n'y donc plus besoin d'utiliser de systèmes électroniques de contrôle de charge des différentes cellules constitutives de l'accumulateur, la protection contre les phénomènes de surcharge étant intrinsèque à la constitution des cellules et non à des systèmes externes. Il s'ensuit, par rapport à des accumulateurs utilisant des systèmes de contrôle, un allègement des accumulateurs et qui plus est, la disparition des soucis de défaillance du système de contrôle qui peuvent survenir.

Enfin, l'action du composé du type polysulfure de lithium peut être efficace aussi, lorsque, au moins l'une des cellules électrochimiques de l'accumulateur se caractérise par une défaillance se matérialisant par une augmentation de la tension de cellule sans recharge effective des électrodes, ce qui nuirait aux cellules environnantes. Avec les composés du type polysulfure de lithium, la tension de cellule des cellules défectueuses se stabilise à une valeur allant classiquement de 2,4 à 2,5 V (ce qui correspond au potentiel, auquel se met en place le mécanisme de navette redox de l'additif), les autres cellules non défectueuses pouvant continuer à se charger.

Comme mentionné ci-dessus, le substrat collecteur de courant supporte sur une première face une électrode de ladite première cellule électrochimique et, sur une deuxième face opposée à ladite première face une électrode de signe opposé de ladite deuxième cellule électrochimique, ce qui signifie, en d'autres termes que le substrat collecteur de courant supporte sur une première face une électrode positive de ladite première cellule électrochimique, et sur une deuxième face opposée à ladite première face une électrode négative de ladite deuxième cellule électrochimique ou vice versa.

Dans le cas de figure des accumulateurs de l'invention, il est nécessaire ainsi que le matériau constitutif du substrat collecteur de courant soit stable à la fois vis-à-vis du soufre élémentaire entrant dans la composition de l'électrode positive et du lithium métallique entrant dans la composition de l'électrode négative.

Un substrat collecteur de courant conforme à l'invention à base de cuivre ou d'alliage de cuivre répond aux conditions de stabilité susmentionnées.

Grâce au couple d'électrodes constitutifs des cellules électrochimiques des accumulateurs de l'invention, il n'est pas nécessaire de recourir à des substrats collecteurs de courant de structure complexe, tel que cela peut être le cas des accumulateurs à architecture bipolaire de l'art antérieur, où, pour des raisons de stabilité vis-à-vis des matériaux d'électrode, le substrat collecteur de courant présente une structure biface, où chaque face est constituée d'un matériau distinct de l'autre face.

L'électrolyte est de préférence un électrolyte liquide comprenant un sel de lithium.

Ainsi, par exemple, l'électrolyte liquide peut comporter un solvant ou mélange de solvants du type carbonate, tels que le carbonate d'éthylène, le carbonate de propylène, le diméthyl carbonate ou le diéthyl carbonate, et/ou un solvant ou mélange de solvants du type éther, tel que le diméthoxyéthane, le dioxolane, le dioxane, le tétraéthylèneglycoldiméthyléther (connu sous l'abréviation TEGDME) et les mélanges de ceux-ci dans lequel est dissous un sel de lithium.

A titre d'exemples, le sel de lithium peut être choisi dans le groupe constitué par LiPF₆, LiClO₄, LiBF₄, LiAsF₆, LiCF₃SO₃, LiN (CF₃SO₂)₃, LiN (C₂F₅SO₂), le bistrifluorométhylsulfonylimide de lithium (connu sous l'abréviation LiTFSI) LiN[SO₂CF₃]₂ et les mélanges de ceux-ci.

L'utilisation d'un électrolyte liquide permet avantageusement d'assurer une bonne diffusion de l'additif polysulfure de lithium d'une électrode à l'autre et ainsi une protection efficace contre la surchage de cellule, même dans le cas de régimes de charge élevés.

L'électrolyte liquide susmentionné peut être amené, dans les cellules électrochimiques des accumulateurs de l'invention, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

A titre d'exemple, le polymère peut comprendre du poly(acrylonitrile), du poly(oxyde d'éthylène), du poly(fluorure de vinylidène), un copolymère de fluorure de vinylidène-hexafluoropropylène ou un autre polymère rendu conducteur ionique par gélification en présence d'un électrolyte liquide. Le sel de lithium peut répondre à la même définition que celle donnée précédemment.

Lorsque la première cellule et/ou la deuxième cellule est située à l'extrémité de l'accumulateur (c'est-à-dire qu'elle constitue la cellule située à l'extrémité de l'empilement), cette première et/ou deuxième cellule contient, outre une électrode déposée sur une face d'un substrat collecteur de courant dont la face opposée est occupée par une électrode de signe opposé de la cellule adjacente, une électrode de signe opposé déposée sur une première face d'un substrat collecteur de courant, la face opposée à ladite première face n'étant pas occupée par une électrode d'une cellule adjacente, compte tenu que ladite première cellule et/ou la deuxième cellule constitue la dernière cellule de l'empilement. Le substrat collecteur de courant dont une seule face est occupée par une électrode peut être également avantageusement en cuivre ou alliage de cuivre, mais peut être également en un autre métal ou alliage métallique.

Les accumulateurs conformes à l'invention sont particulièrement adaptés à des produits nécessitant des architectures d'intégration compactes (tels que dans les systèmes embarqués, les systèmes autonomes), où une énergie importante est requise. Ce type d'exigences peut se rencontrer dans les domaines des produits nécessitant une alimentation autonome, ce qui est le cas des domaines de l'informatique, de la vidéo, de la téléphonie, des transports tels que les véhicules électriques, les véhicules hybrides, ou encore des domaines médicaux, spatiaux, de la microélectronique.

L'invention va, à présent, être décrite en référence au mode de réalisation particulier défini ci-dessous en référence aux figures annexées.

### BRÈVE DESCRIPTION DES DESSINS

La figure unique représente un accumulateur conforme à l'invention selon un mode de réalisation particulier.

### EXPOSÉ DÉTAILLÉ DE MODES DE RÉALISATION PARTICULIERS

L'exemple présenté ci-dessous illustre la préparation d'un accumulateur conforme à l'invention représenté sur la figure unique en annexe, cet accumulateur étant composé d'un empilement d'une première cellule électrochimique et d'une deuxième cellule électrochimique séparées par un substrat collecteur de courant en cuivre dit « bipolaire », chaque cellule comprenant respectivement une électrode positive comprenant du soufre élémentaire et une électrode négative comprenant du lithium métallique séparées par un électrolyte.

### 1) Réalisation de l'électrode positive dite « électrode positive périphérique »

Une électrode positive de composition suivante :
*80% en masse de soufre élémentaire ;
*10% en masse de noir de carbone super P ;
*10% en masse de polyfluorure de vinylidène (PVDF)
   est préparée selon le protocole suivant :
   - pesée des poudres de soufre élémentaire et de noir de carbone séparément ;
   - préparation d'une solution de N-méthylpyrrolidone (NMP) comprenant le PVDF ;
   - ajout progressif dans ladite solution des poudres susmentionnées tout en procédant à un mélange par agitation mécanique ;
   - après obtention d'un mélange homogène, enduction à l'aide d'une racle micrométrique d'une face d'un feuillard en cuivre de 20 µm d'épaisseur par ledit mélange de sorte à obtenir une couche présentant 100 µm d'épaisseur ;
   - premier séchage de la couche ainsi déposée dans une étuve à 55°C pendant 24 heures, de sorte à obtenir l'évaporation de la NMP ;
   - second séchage de la couche à 50°C pendant 48 heures, pour éliminer toutes traces d'eau résiduelle, moyennant quoi la couche résultante constitue l'électrode positive, cette couche présentant une épaisseur de 15 µm.

### 2) Réalisation de l'électrode négative dite « électrode négative périphérique ».

L'électrode négative périphérique est réalisée par laminage à chaud d'une feuille de lithium métallique d'une épaisseur de 135 µm sur un feuillard en cuivre faisant office de substrat collecteur du courant.

### 3) Réalisation du substrat dit « substrat bipolaire »

Le substrat bipolaire est réalisé en mettant en oeuvre le protocole opératoire exposé au paragraphe 1) ci-dessus sur une première face d'un feuillard en cuivre de 20 µm d'épaisseur et le protocole opératoire exposé au paragraphe 2) ci-dessus sur une deuxième face du même feuillard, cette deuxième face étant opposée à ladite première face.

### 4) Réalisation de l'empilement

L'accumulateur représenté sur la figure unique est réalisé en deux étapes.

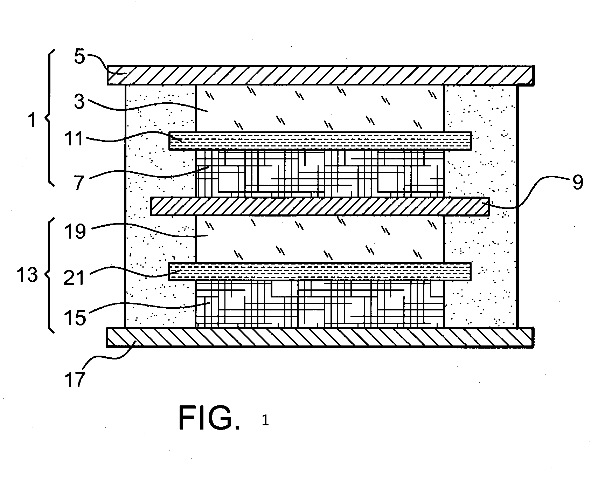

Une première étape, réalisée en atmosphère non contrôlée, consiste à placer selon une configuration conforme à celle représentée sur la figure 1 l'électrode positive périphérique, le substrat bipolaire et l'électrode négative périphérique dans deux joints en polyéthylène en forme de U, laissant une face du générateur ouverte, suivie d'une étape de compression à chaud de l'ensemble de sorte à assurer l'étanchéité de l'accumulateur.

Une deuxième étape, réalisée en atmosphère inerte, consiste à introduire, par la face ouverte, dans les deux cellules entre l'électrode positive et l'électrode négative un séparateur en polyéthylène/polypropylène imbibé d'un électrolyte liquide à base de bistriméthylsulfonylimide de lithium LiTFSI (1 mol.L⁻¹) en solution dans un mélange 50/50 en volume de tétraéthylèneglycoldiméthyléther (TEGDME)/dioxolane.

La face ouverte est ensuite fermée au moyen de deux autres joints en polyéthylène.

A l'issue de ces différentes étapes, l'on obtient, conformément à ce qui est représenté sur la figure unique, un accumulateur électrochimique au lithium comprenant :
- une première cellule électrochimique 1 comprenant une électrode positive périphérique 3 comprenant du soufre élémentaire déposée sur un substrat conducteur en cuivre 5 et, en vis-à-vis, une électrode négative 7 comprenant du lithium métallique déposée sur une première face d'un substrat conducteur en cuivre 9, ladite électrode négative et ladite électrode positive étant séparées l'une de l'autre par un séparateur 11 imbibé d'un électrolyte tel que défini ci-dessus ; et
- une deuxième cellule électrochimique 13 comprenant une électrode négative périphérique 15 comprenant du lithium métallique déposée sur un substrat conducteur en cuivre 17 et, en vis-à-vis, une électrode positive 19 comprenant du soufre élémentaire déposée sur une deuxième face dudit substrat conducteur en cuivre 9, ladite deuxième face étant opposée à ladite première face, ladite électrode négative et ladite électrode positive étant séparées l'une de l'autre par un séparateur 21 imbibé d'un électrolyte tel que défini ci-dessus.

## Revendications

1. Accumulateur électrochimique au lithium comprenant au moins une première cellule électrochimique (1) et au moins une deuxième cellule électrochimique (13) séparées l'une de l'autre par un substrat collecteur de courant (9), lequel substrat supporte sur une première face une électrode (7) de ladite première cellule électrochimique et sur une deuxième face opposée à ladite première face une électrode de signe opposé (19) de ladite deuxième cellule électrochimique, chaque cellule comprenant une électrode positive (3, 19) et une électrode négative (7, 15) séparées par un électrolyte (11, 21), **caractérisé en ce que** :
- ledit substrat collecteur de courant (9) est en cuivre ou en alliage de cuivre ;
- l'électrode négative (7, 15) comprend un matériau choisi parmi :
*les composés oxydes métalliques de formule MₓO_{y} avec M représentant un élément choisi parmi Ti, Cr, Mn, Fe, Co, Ni, Cu, Mo, W et les mélanges de ceux-ci, x et y étant des entiers positifs choisis de telle sorte que la charge totale des cations compense la charge totale des anions, de sorte à ce que le composé soit électriquement neutre ;
*le lithium métallique ou un alliage comprenant du lithium métallique ;
* l'étain métallique ; et
*des mélanges de ceux-ci ; et
- l'électrode positive (3, 19) comprend un matériau choisi parmi :
*le soufre élémentaire ;
*des composés sulfures ;
et les mélanges de ceux-ci.

2. Accumulateur selon la revendication 1, dans lequel :
*l'électrode positive (3, 19) comprend du soufre élémentaire ; et
*l'électrode négative (7, 15) comprend du lithium métallique ou un alliage comprenant du lithium métallique.

3. Accumulateur selon la revendication 1 ou 2, dans lequel l'électrolyte (11, 21) est un électrolyte liquide comprenant un sel de lithium.

4. Accumulateur selon la revendication 3, dans lequel le sel de lithium est choisi parmi LiPF₆, LiClO₄, LiBF₄, LiAsF₆, LiCF₃SO₃, LiN (CF₃SO₂)₃, LiN(C₂F₅SO₂), le bistrifluorométhylsulfonylimide de lithium LiN[SO₂CF₃]₂ et les mélanges de ceux-ci.

5. Accumulateur selon la revendication 3 ou 4, dans lequel l'électrolyte (11, 21) comprend un ou plusieurs solvants de la famille des carbonates et/ou de la famille des éthers.

## Patentansprüche

1. Elektrochemischer Lithiumakkumulator mit wenigstens einer ersten elektrochemischen Zelle (1) und wenigstens einer zweiten elektrochemischen Zelle (13), voneinander getrennt durch ein Stromkollektorsubstrat (9), wobei dieses Substrat auf einer ersten Seite eine Elektrode (7) der genannten ersten elektrochemischen Zelle trägt, und auf einer der genannten ersten Seite entgegengesetzten zweiten Seite eine Elektrode umgekehrten Vorzeichens (19) der genannten zweiten elektrochemischen Zelle trägt, wobei jede Zelle eine positive Elektrode (3, 19) und eine negative Elektrode (7, 15), getrennt durch einen Elektrolyten (11, 21), umfasst, **dadurch gekennzeichnet, dass**
- das genannte Stromkollektorsubstrat (9) aus Kupfer oder einer Kupferlegierung ist ;
- die negative Elektrode (7, 15) ein Material umfasst, das ausgewählt wird unter:
* den Metalloxidverbindungen der Formel MₓO_{y}, wobei M ein Element repräsentiert, ausgewählt unter Ti, Cr, Mn, Fe, Co, Ni, Cu, Mo, W und ihren Mischungen, und x und y ganze positive Zahlen sind, so ausgewählt, dass der Gesamtanteil der Kationen den Gesamtanteil der Anionen kompensiert, so dass die Verbindung elektrisch neutral ist ;
* dem metallischen Lithium oder einer metallisches Lithium enthaltenden Legierung ;
* dem metallischen Zinn ; und
* ihren Mischungen ; und
- die positive Elektrode (3, 19) ein Material umfasst, das ausgewählt wird unter :
* dem Elementarschwefel ;
* Sulfidverbindungen ;
und den Mischungen von diesen.

2. Akkumulator nach Anspruch 1, bei dem :
* die positive Elektrode (3, 19) Elementarschwefel enthält ; und
* die negative Elektrode (7, 15) metallisches Lithium oder eine metallisches Lithium enthaltende Legierung umfasst.

3. Akkumulator nach Anspruch 1 oder 2, bei dem der Elektrolyt (11, 21) ein flüssiger, ein Lithiumsalz enthaltender Elektrolyt ist.

4. Akkumulator nach Anspruch 3, bei dem das Lithiumsalz ausgewählt wird unter LiPF₆, LiClO₄, LiBF₄. LiAsF₆, LiCF₃SO₃, LiN(CF₃SO₂)₃, LiN(C₂F₅SO₂), Lithiumbistrifluormethansulfonimid LiN[SO₂CF₃]₂ und den Mischungen von diesen.

5. Akkumulator nach Anspruch 3 oder 4, bei dem der Elektrolyt (11, 21) ein oder mehrere Lösungsmittel aus der Familie der Carbonate und/oder der Familie der Esther umfasst.

## Claims

1. A lithium electrochemical accumulator comprising at least one first electrochemical cell (1) and at least one second electrochemical cell (13) separated from each other by a current-collecting substrate (9), which substrate supports on a first face an electrode (7) of said first electrochemical cell and on a second face opposite to said first face, an electrode of opposite sign (19) of said second electrochemical cell, each cell comprising a positive electrode (3, 19) and a negative electrode (7, 15) separated by an electrolyte (11, 21), **characterized in that**:
- said current-collecting substrate (9) is in copper or in copper alloy;
- the negative electrode (7, 15) comprises a material selected from:
*metal oxide compounds of formula MₓO_{y} with M representing an element selected from Ti, Cr, Mn, Fe, Co, Ni, Cu, Mo, W and mixtures thereof, x and y being positive integers selected so that the total charge of the cations compensates for the total charge of the anions so that the compound is electrically neutral;
*lithium metal or an alloy comprising lithium metal;
*tin metal; and
*mixtures thereof; and
- the positive electrode (3, 19) comprises a material selected from:
*elemental sulfur;
*sulfide compounds;
and mixtures thereof.

2. The accumulator according to claim 1, wherein:
*the positive electrode (3, 19) comprises elemental sulfur; and
*the negative electrode (7, 15) comprises lithium metal or an alloy comprising lithium metal.

3. The accumulator according to claim 1 or 2, wherein the electrolyte (11, 21) is a liquid electrolyte comprising a lithium salt.

4. The accumulator according to claim 3, wherein the lithium salt is selected from LiPF₆, LiClO₄, LiBF₄, LiAsF₆, LiCF₃SO₃, LiN(CF₃SO₂)₃, LiN(C₂F₅SO₂), lithium bistrifluoromethylsulfonylimide LiN[SO₂CF₃]₂ and mixtures thereof.

5. The accumulator according to claim 3, wherein the electrolyte (11, 21) comprises one or more solvents from the family of carbonates and/or from the family of ethers.
